# EUROPÄISCHE PATENTSCHRIFT

(11) **EP 1 690 742 B1**
(45) Veröffentlichungstag und Bekanntmachung des Hinweises auf die Patenterteilung: **28.11.2007**
(21) Anmeldenummer: 05008697.4
(22) Anmeldetag: 21.04.2005
(51) Int. Cl.: B60R 13/08

(54) **Strukturbauteil, insbesondere Abschirmteil**
Insulating structure for vehicle
Structure isolante pour véhicule

(30) Priorität: 11.02.2005 DE 102005006577
(43) Veröffentlichungstag der Anmeldung: 16.08.2006
(73) Patentinhaber: ElringKlinger AG, 72581 Dettingen/Erms (DE)
(72) Erfinder: Hofmann, Dieter, 91452 Wilhermsdorf (DE); Lang, Markus, 92318 Neumarkt (DE)
(74) Vertreter: Bartels & Partner

(56) Entgegenhaltungen:
- DE-A1- 2 161 457
- DE-U1- 9 409 126
- DE-U1-5202004 011 55
- US-A1- 2004 142 152

## Beschreibung

Die Erfindung betrifft ein Strukturbauteil, insbesondere Abschirmteil, gemäß der Merkmalsausgestaltung des Oberbegriffes des Patentanspruches 1.

Während die Wärmeentwicklung beispielsweise eines sparsamen leistungsoptimierten Dieselmotors am Zylinderkurbelwellengehäuse sehr gering sein kann, gilt das für "heiße Zonen" wie bei Krümmer, Turbolader, Katalysator etc. keineswegs. Durch die immer kompaktere Konstruktion der Motoren geraten zunehmend Komponenten in enge Nachbarschaft, die thermisch nicht "kompatibel" sind. Demgemäß ist es notwendig, mit sog. Abschirmteilen, wie Hitzeschildern, thermische Motorenkomponenten gegenüber angrenzenden wärmeempfindlichen Aggregaten, wie Sensoren, Kraftstoffleitungen, Druckdosen, Karosserieteilen etc., zu schützen. Die Situation wird durch den Kompaktbau auch insofern verschärft, dass die hohe Packungsdichte der Aggregate den kühlenden Luftstrom im Motorraum einengt. Auch Lärmschutzmaßnahmen können dazu mit beitragen. So können beispielsweise Kunststoffbodenplatten, die den Schallaustritt vom Motorraum zur Fahrbahn vermindern sollen, unter Umständen eine wirkungsvolle Isolation erzeugen, mit der Wärme im Motorraum eingeschlossen wird. Katalysatoren zählen wegen ihrer phasenweisen hohen Oberflächentemperatur zu den Hitzequellen, die den Einsatz von schützenden Schildbarrieren jedenfalls erforderlich machen können. Ein typisches Beispiel hierfür sind konstruktive Maßnahmen, wie die Positionierung des Katalysators dicht am Krümmer. Dieses Bauprinzip, das der schnellen Aufheizung des Katalysators und damit der Emissionsminderung in der Kaltstartphase dient, verlegt eine starke Hitzequelle in den Motorraum, wo sich zahlreiche Aggregate auf engem Raum drängen. Ebenfalls eine Ursache für die wachsende Bedeutung von Abschirmteilen, wie Hitzeschildern, ist der Trend zum Einsatz von Thermoplasten. Die hervorragend formbaren, leichten und wirtschaftlichen Werkstoffe setzen sich im Motorraum zusehends durch, erfordern aber ein besonderes Augenmerk im Hinblick auf die Umgebungstemperaturen am Einsatzort bezogen auf sonstige thermische Motorenteile (Neue Werkstoffe und Entwicklungs-Tools für den Hitzeschutz in MTZ 12/2001, Jahrg.62, Seite 1044ff).

Durch die DE 102 47 641 B3 ist ein Strukturbauteil bekannt, insbesondere in Form eines schalldämpfenden Abschirmteils als Bauteil eines Kraftfahrzeuges. Um bei dem bekannten Strukturbauteil die Schalldämmung zu verbessern, besteht das dahingehende Abschirmteil aus einem Schirmkörper mit einem Basisrand als Strukturteil einer ersten Art, das randseitig über winkelförmige Bügelschenkel innerhalb des Motorraumes an dortigen feststehenden Teilen festlegbar ist und thermische Motorenkomponenten gegenüber wärmeempfindlichen Baukomponenten abschirmt.

Der Schirmkörper als Strukturteil der ersten Art ist als Ganzes im Querschnitt gesehen in der Art eines Winkels ausgebildet und insoweit symmetrisch aufgebaut. Dabei geht der winkelförmige Mittenbereich randseitig in Bereiche stärkerer Krümmung über, die in stegartigen Abschlüssen mit geradlinigem Verlauf einmünden, wobei an den dahingehenden beiden, einander gegenüberliegenden Randbereichen die winkelförmigen Bügel als Festlegemittel nachträglich angebracht sind. Bei der bekannten Lösung besteht der Schirmkörper aus zwei Metallblechlagen, zwischen denen sich eine schalldämmende und/oder wärmedämmende Dämmschicht erstreckt und zum Festlegen der Blechdecklagen aneinander dient eine Bördelung, bei der der freie Bördelrand der einen Decklage den Randbereich der anderen Decklage flächig umfaßt. Um Gewicht zu sparen, ist der Schirmkörper aus Aluminium oder einem sonstigen Leichtmetall aufgebaut.

Die bekannte Lösung dient vorzugsweise der Abschirmung einer Kupplung zwischen einem Getriebeflansch und einer Kardanwelle vor vom Getriebe kommenden Körperschall sowie einer dauerhaften Beeinflussung durch Temperaturstrahlung eines benachbart verlaufenden Abgasrohres. Bei Versuchen wurde eine Verringerung der Schallemission bei der bekannten Lösung um 3 dB erreicht. Um die dahingehende Abschirmwirkung zu erreichen, erstrecken sich längs des Mittenbereiches des ersten Strukturteils in Form des Schirmkörpers weitere Strukturteile einer zweiten Art, die sich in Form von sickenförmigen Längs- und Querrippen über die Außenseite des Schirmkörpers erstrecken. Charakteristisch an dieser bekannten Strukturierung ist, dass sich an Längsrippen, die sich über die gesamte Länge des Schirmkörpers erstrecken können und insoweit in Längsausrichtung des Strukturteils der ersten Art angeordnet sind, einstückig angeformte Querrippen anschließen, die eine Art Noppenstruktur ausbilden und die in alternierender Reihenfolge benachbart in Zwischenabstände zwischen zwei jeweiligen Querrippen einer benachbarten Längsrippe eingreifen. Die nach außen hin stärker abgekrümmten Randbereiche mit den Anschlußbügeln sind hingegen von den genannten Rippen freigehalten. Im Hinblick auf die unterbrochene Querrippenstruktur der bekannten Lösung steht zu erwarten, dass insoweit die Steifigkeit und Festigkeit reduziert ist. Ferner ist an der Übergangsstelle zu den Anschlußbügeln eine Aussteifung des Schirmkörpers nur über die abgewinkelten Bügelschenkel erhalten, die insoweit die Anschlußgeometrie, hier des Strukturbauteils, an feststehenden Motor- oder Chassiskomponenten weitgehend definieren, was dergestalt die Einsatzmöglichkeiten des bekannten Strukturbauteils einschränkt. Auch benötigen die Anschlußbügel mit ihren gewinkelten Bügelschenkeln sowie den Augenanschlußstellen für den Durchgriff eines Befestigungsmittels (Schraube) zum einen Bauraum und zum anderen erhöhen sie das Gewicht für die bekannte Lösung.

Durch die US 2004/0142152 A1 ist ein dreilagiges Strukturbauteil in Form eines Hitzeschildes als Abschirmteil bekannt mit von ihrer Flächenausdehnung und/oder ihrem Richtungsverlauf zumindest teilweise unterschiedlich ausgebildeten Strukturteilen, von denen ein Strukturteil einer ersten Art mit einer Krümmung und mit einer Längsausrichtung versehen ist und mit Strukturteilen einer zweiten Art, die zumindest teilweise der dahingehenden Krümmung nachfolgen, wobei das Strukturteil der ersten Art als Schale ausgebildet ist und die Strukturteile der zweiten Art in Form von eingeprägten Sicken verlaufend in dem Strukturteil der ersten Art angeordnet sind, vergleichbar einem Koppelgeschirr im Bereich eines Pferdekopfes, dem das bekannte Hitzeschild von seiner Außenkontur her nachempfunden ist, wobei die Strukturteile der zweiten Art über Knotenstellen miteinander verbunden sind und, ohne dass diese definierte Gruppen bilden, sind diese über die Knotenstellen in relativ weitem Abstand zueinander gehalten. Um dennoch ein hohes Maß an Steifigkeit zu erreichen, ist demgemäß bei der bekannten Lösung vorgesehen, zusätzliche finger- oder zehenartige Einprägungen in Rundbereiche zwischen benachbart angeordneten Strukturteilen der zweiten Art vorzusehen, was jedoch den Fertigungsaufwand für das bekannte Schild erhöht.

Durch das Gebrauchsmuster DE 20 2004 011 555 U1 ist ein gattungsgemäßes Strukturbauteil, insbesondere Abschirmteil, bekannt mit von ihrer Flächenausdehnung und/oder ihrem Richtungsverlauf zumindest teilweise unterschiedlich ausgebildeten Strukturteilen, von denen mindestens ein Strukturteil einer ersten Art mit einer Krümmung versehen ist, die in Richtung mindestens eines Randbereichs zumindest teilweise zunimmt, und mit Strukturteilen einer zweiten Art, die zumindest teilweise der dahingehenden Krümmung nachfolgen, wobei in dem jeweiligen gekrümmten Randbereich mindestens ein Strukturteil einer dritten Art angeordnet ist, nach dessen Lage sich die Strukturteile der zweiten Art ausrichten, die sich zumindest im Bereich der Krümmungsänderung zum Randbereich entlang des ersten Strukturteils durchgehend erstrecken. Die der Krümmung des ersten Strukturteils in Querrichtung durchgehend nachfolgenden Strukturteile der zweiten Art, die in der Art von eingesickten Rippenverläufen ausgebildet sind, weisen benachbart zueinander einen gleichmäßigen Abstand auf und bilden dergestalt eine Art Panzerung aus, die zu einem hochfesten Abschirmteil führen, das als Schale eine flache Mittenkrümmung aufweist, die zum Randbereich hin zunimmt. Aufgrund der hochfesten Aussteifung über die genannte Rippenpanzerung in Form der Strukturteile der zweiten Art sind bereits aus Formgebungszwecken heraus die Anwendungsmöglichkeiten für solche Abschirmteile entsprechend eingeschränkt.

Ausgehend von diesem Stand der Technik stellt sich daher die Erfindung die Aufgabe, ein Strukturbauteil der genannten Art unter Beibehalten seiner Vorteile, nämlich eine sehr gute Schall- und Wärmeisolation sicher zu stellen, dahingehend weiter zu verbessern, dass weniger Einbauraum benötigt wird und dass es universell einsetzbar ist bei gleichzeitig erhöhter Steifigkeit sowie Festigkeit und reduziertem Gewicht mit vergleichbar niedrig anzusetzenden Herstellkosten. Eine dahingehende Aufgabe löst ein Strukturbauteil mit den Merkmalen des Patentanspruches 1 in seiner Gesamtheit.

Dadurch, dass gemäß dem kennzeichnenden Teil des Patentanspruches 1 die Halbschale mit im wesentlichen gleichförmiger Krümmung ist, dass auf dem Sattel der Halbschale sich in Längsausrichtung des Strukturteils der ersten Art ein Strukturteil der vierten Art erstreckt, in das endseitig die Strukturteile der zweiten Art einstückig einmünden, und dass der axiale Abstand in Längsausrichtung des Strukturteils (10) der ersten Art zwischen benachbarten Strukturteilen der zweiten Art einer Gruppe deutlich geringer ist als der axiale Abstand zwischen den Gruppen untereinander, ist durch die paarweise zu Gruppen zusammengefaßten Strukturteile der zweiten Art ein Schirmkörper realisiert, der mit wenig Aussteifungselementen auskommt, was die Herstellkosten reduzieren hilft. Da insoweit wenig Übergangsstellen geschaffen sind zwischen Strukturteilen verschiedener Art, sind auch weniger mögliche Versagensstellen gebildet, was sich günstig auf die Dauerhaltbarkeit des erfindungsgemäßen Struktur bauteils auswirkt.

Durch die Überführung der Strukturteile der zweiten Art in Richtung des jeweiligen Randbereichs quer zur Längsausrichtung des Strukturteils der ersten Art sind die vorzugsweise in der Art von sickenförmigen Versteifungsrippen ausgebildeten Strukturteile durchgehend zum Randbereich geführt und versteifen dergestalt die Randstruktur des Schirmkörpers in Form des ersten Strukturteils. Aufgrund der Ausgestaltung des Strukturbauteils als Halbschale mit im wesentlichen gleichförmiger Krümmung ist sichergestellt, dass es wenig Einbauraum einnimmt, so dass sich das Strukturbauteil demgemäß besonders gut für den Einsatz zur Abschirmung eines Katalysators oder von Teilen desselben eignet. Durch die halbschalenförmige Ausgestaltung entsteht eine sichere Kammerung, die nicht nur wärmetechnisch günstig ist, sondern auch optimal ist im Hinblick auf eine gewünschte wirksame Schallisolierung.
Dadurch, dass auf dem Sattel der Halbschale sich in Längsausrichtung des Strukturteils der ersten Art ein Strukturteil der vierten Art erstreckt, in das endseitig die Strukturteile der zweiten Art einmünden, ist mit geringem Aufwand insbesondere in Längsausrichtung des Strukturteils der ersten Art die Torsionssteifigkeit der Halbschale erhöht. Auch Biegewechselspannungen sind dergestalt sicher von der Struktur aufnehmbar. Die Strukturbauteillösung findet insbesondere dort auch sinnvoll ihren Einsatz, wo im Betrieb mit einem hohen Aufkommen an Vibrationen zu rechnen ist.
Zur weiteren Festigkeitserhöhung ist vorzugsweise weiter vorgesehen, dass das eine freie Ende des Strukturteils der vierten Art im Bereich des jeweiligen Strukturteils der dritten Art in ein Strukturteil der fünften Art einmündet. Da die Strukturteile der dritten Art aus flügelartigen Erweiterungsstücken gebildet sind, die vorzugsweise dem Festlegen des Schirmkörpers an Motor- oder Chassisteilen dienen, ist über das Strukturteil der fünften Art vorzugsweise in Form einer verstärkten Querrippe eine zusätzliche Aussteifung erreicht, die der Dauerhaltbarkeit des Schirmkörpers im Betrieb zugute kommt.
Durch den derart entstehenden Aufbau verschiedener Strukturteile, die vorzugsweise aus sickenförmigen Längs- und Querrippen bestehen, ist in allen Ausrichtungen des Abschirmteils eine deutliche Verfestigung und Versteifung realisiert.

Weitere vorteilhafte Ausführungsformen des erfindungsgemäßen Strukturbauteils sind Gegenstand der sonstigen Unteransprüche.

Im folgenden wird das erfindungsgemäße Strukturbauteil anhand eines Ausführungsbeispiels nach der Zeichnung näher erläutert. Dabei zeigen in prinzipieller und nicht maßstäblicher Darstellung die
- Fig. 1: eine perspektivische Draufsicht auf das Strukturbauteil als Ganzes;
- Fig. 2: in perspektivischer Darstellung eine stirnseitige Ansicht auf das Strukturbauteil nach der Fig.1;
- Fig. 3: eine Seitenansicht auf das Strukturbauteil gesehen in Pfeilrichtung X nach der Fig.2.

Die erfindungsgemäße Lösung betrifft ein Strukturbauteil, insbesondere Abschirmteil, für den Einsatz bei Kraftfahrzeugen mit von ihrer Flächenausdehnung und/oder ihrem Richtungsverlauf zumindest teilweise unterschiedlich ausgebildeten Strukturteilen verschiedener Art 10,12,14,16,18, von denen mindestens ein Strukturteil 10 einer ersten Art als Halbschale mit im wesentlichen gleichförmig ausgebildeter Krümmung versehen ist, sowie mit Strukturteilen 12 einer zweiten Art, die paarweise zu Gruppen 20,22, zusammengefaßt sich quer zur Längsausrichtung des Strukturteils der ersten Art 10 erstrecken.

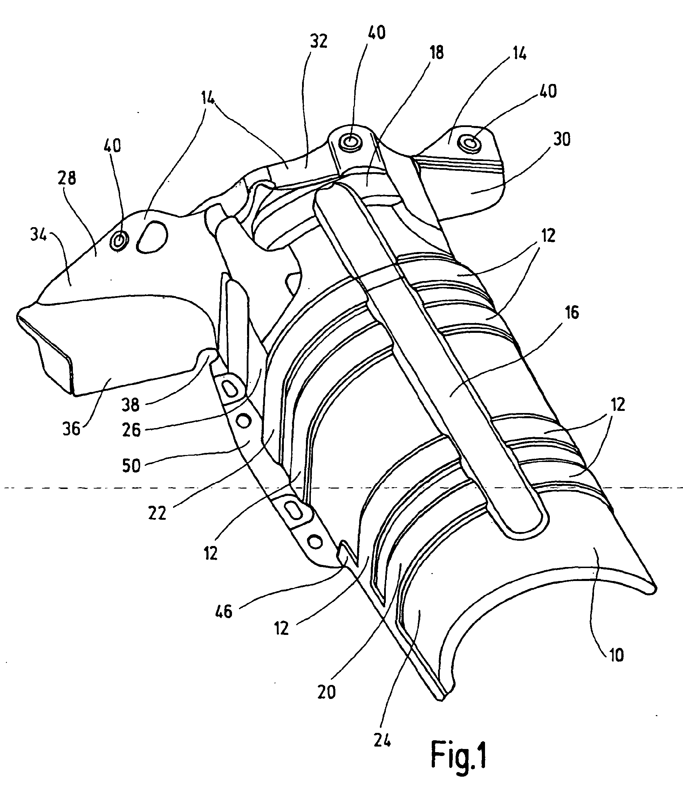

Wie die Figuren des weiteren zeigen, sind beide genannten Gruppen 20,22 mit je vier Strukturteilen 12 der zweiten Art versehen, wobei die beiden Gruppen 20,22 in Längsausrichtung des Strukturteils 10 der ersten Art voneinander beabstandet sich in Endbereichen 24,26 desselben befinden. Mithin sind die beiden Endbereiche 24,26 des Strukturteils 10 der ersten Art unmittelbar durch Teile der Halbschale gebildet, wobei in Blickrichtung auf die Fig.1 gesehen an dem oberen Endbereich 26 sich drei flügelartige Erweiterungsstücke 28,30 und 32 anschließen, und zwar als weitere Strukturteile 14 der dritten Art, die sich quer zur Längsausrichtung des Strukturteils 10 der ersten Art anschließen.

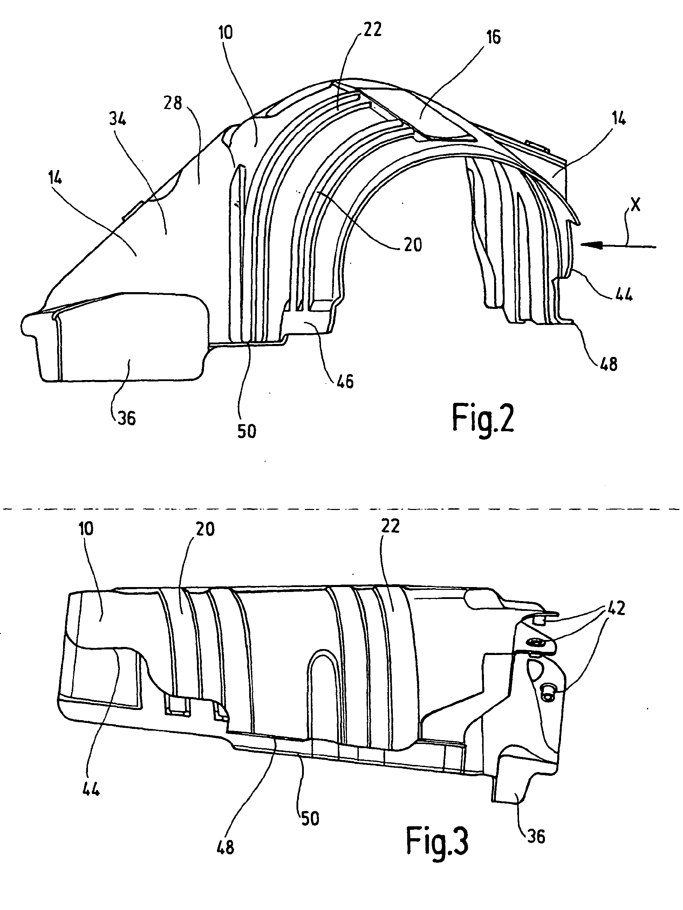

Das insbesondere in den Fig.1 und 2 gezeigte Erweiterungsstück 28 schließt sich in radialer Richtung an den Endbereich 26 der Halbschale an und besteht im wesentlichen aus einem dreieckförmigen Anschlußteil 34 sowie einem darunterliegenden rechteckförmigen Stützteil 36, das über eine halbkreisförmige Aussparung 38 in den Außenmantel des Randbereichs der Halbschale übergeht. Das gegenüberliegende weitere flächige Erweiterungsstück 30 ist von den geometrischen Abmessungen her kleiner ausgestaltet und schließt sich gleichfalls flügelartig an den Endbereich 26 der Halbschale an. Das dritte Erweiterungsstück 32 bildet in Fortführung der axialen Längsausrichtung der Halbschale diese bis zum Ende derselben aus. Neben einer zusätzlichen Aussteifung am oberen Ende der Halbschale dienen die dahingehenden Erweiterungsstücke 28,30,32 auch dem Durchgriff eines Befestigungsmittels, beispielsweise in Form einer Schraube, die dahingehende Ausnehmungen 40 in den Erweiterungsstücken 28,30,32 durchgreift zum Festlegen des Strukturbauteils an nicht näher dargestellten Motoren- oder Chassiskomponenten. Die dahingehenden Ausnehmungen 40 sind vorzugsweise durch Festlegebüchsen 42 gebildet (siehe auch Fig.3), die dergestalt als zusätzliche Dämpfungselemente ausgelegt sein können.

Auf dem Sattel der Halbschale erstreckt sich in Längsausrichtung des Strukturteils 10 der ersten Art ein Strukturteil 16 der vierten Art, wobei endseitig in dieses Strukturteil die acht Strukturteile 12 der zweiten Art einmünden oder sich randseitig anschließen. Der axiale Abstand in Längsausrichtung des Strukturteils 10 der ersten Art zwischen benachbarten Strukturteilen 12 der zweiten Art einer Gruppe 20 oder 22 ist dabei deutlich geringer als der axiale Abstand zwischen den Gruppen 20,22 untereinander und beträgt weniger als die Breite eines Strukturteils 12 der zweiten Art in Längsausrichtung des Schirmkörpers betrachtet. In Abhängigkeit des Einsatzfalles läßt sich bei geringen Werkzeugherstellkosten insbesondere der Abstand zwischen den Gruppen 20,22 verändern, um dergestalt bei gleichem Grundaufbau des Schirmkörpers eine Vielzahl an Anwendungsmöglichkeiten abdecken zu können. Ferner können mehr als zwei Gruppen (nicht dargestellt) sich in Längsausrichtung des Schirmkörpers, wie gezeigt, an der Halbschale befinden.

Wie sich weiter insbesondere aus der Fig.1 ergibt, ist das eine freie Ende des Strukturteils 16 der vierten Art im Bereich des jeweiligen Strukturteils 14 der dritten Art in ein Strukturteil 18 der fünften Art einmündend geführt, das sich wiederum quer zur Längsausrichtung des Strukturteils 10 der ersten Art erstreckt und auf dessen Oberseite teilweise der Halbschalenform im oberen Sattelbereich nachfolgt. Das andere freie Ende des Strukturteils 16 der vierten Art befindet sich hingegen in einem vorgebbaren axialen Abstand zum freien Ende der genannten Halbschale. Mithin erstreckt sich rippenförmig das Strukturteil 16 der vierten Art entlang des Sattels der Halbschale im wesentlichen über deren gesamte Länge und erhöht dergestalt insbesondere deren Knickstabilität und trägt zur Erhöhung der Torsionssteifigkeit in Verbindung mit den Strukturteilen 12 der zweiten Art mit bei. Ferner ist die Querausdehnung des Strukturteils 16 der vierten Art deutlich größer gewählt als die Querausdehnung der Strukturteile 12 der zweiten Art in Längsausrichtung gesehen.

Wie sich des weiteren aus der Fig.3 ergibt, weist zumindest ein freier Seitenbereich der Halbschale eine Mehrfachstufung 44 auf, wobei die Stufung über zwei Teilstufen in Richtung des freien Endes der Halbschale zurückgesetzt ist. Die Übergänge der Mehrfachstufung 44 innerhalb der Stufung sowie zu den Randbereichen der Halbschale an deren freiem Ende und an deren Seite erfolgt vorzugsweise in gebogenen Verläufen, um etwaige Versagensstellen reduzieren zu helfen. Aufgrund der Aussparung über die Mehrfachstufung 44 besteht die Möglichkeit, den halbschalenförmigen Schirmpanzer um Fahrzeugbauteile herumzuführen. Am gegenüberliegenden Randbereich der Halbschale (vgl. Fig.1 und 2) münden die dortigen freien Enden der Strukturteile 12 der zweiten Art in eine stegartige Befestigung 46 am freien Randbereich der Halbschale, wohingegen die gegenüberliegenden Strukturteile 12 der zweiten Art, die der ersten Gruppe 20 zugehörig sind, zumindest teilweise in die Mehrfachstufung 44 einmünden sowie in einen auskragenden Befestigungssteg 48, der seine Entsprechung auf der gegenüberliegenden Seite der Halbschale in einem weiteren Befestigungssteg 50 findet. Die dahingehenden Befestigungsstege 48,50 dienen gleichfalls dem Festlegen des Abschirmteils an nicht näher dargestellten Fahrzeug- oder Chassisteilen.

Das jeweilige Strukturteil 10,12,14,16,18 kann mehrlagig aufgebaut sein, insbesondere aus zwei Blechdecklagen bestehen, wobei sich zwischen den beiden Blechdecklagen eine nicht näher dargestellte schall- und/oder wärmedämmende Zwischenlage erstrecken kann. Da der dahingehende Aufbau für Strukturteile üblich ist, wird an dieser Stelle hierauf nicht mehr näher eingegangen. Sofern man einen erhöhten Korrosionsschutz sicherstellen möchte, können die genannten Decklagen vorzugsweise aus einem Edelstahlmaterial gebildet sein. Ferner ist das Strukturbauteil in der Art eines Umformteils ausgestaltet, wobei die vorzugsweise einstückig miteinander verbundenen Strukturteile 12,16 und 18 je nach Art sickenförmige Längs- und Querrippen ausbilden, die einstückiger Bestandteil des konvexen Strukturteils 10 der ersten Art sind und insoweit auf dessen Oberseite angeordnet sind.

## Patentansprüche

1. Strukturbauteil, insbesondere Abschirmteil, mit von ihrer Flächenausdehnung und/oder ihrem Richtungsverlauf zumindest teilweise unterschiedlich ausgebildeten Strukturteilen (10,12,14,16,18), von denen mindestens ein Strukturteil (10) einer ersten Art mit einer Krümmung und mit einer Längsausrichtung versehen ist, und mit Strukturteilen (12) einer zweiten Art, die zumindest teilweise der dahingehenden Krümmung nachfolgen, wobei das Strukturteil (10) der ersten Art als Schale ausgebildet ist, wobei die Strukturteile (12) der zweiten Art paarweise zu Gruppen (20,22) zusammengefaßt sich quer zur Längsausrichtung des Strukturteils (10) der ersten Art erstrecken, wobei die jeweilige Gruppe (20,22) mit je vier Strukturteilen (12) der zweiten Art vorhanden sind, wobei die unmittelbar benachbarten Gruppen (20,22) in Längsausrichtung des Strukturteils (10) der ersten Art gesehen voneinander beabstandet sind, wobei der axiale Abstand zwischen benachbarten Strukturteilen (12) der zweiten Art einer Gruppe (20 oder 22) weniger als die Breite eines Strukturteils (12) der zweiten Art in Längsausrichtung des Strukturteils (10) der ersten Art ist, und wobei die Schale eine Halbschale ist und an den beiden Längsseiten der Halbschale paarweise gegenüberliegend jeweils zwei Strukturteile (12) der zweiten Art Teil der Gruppe (20 oder 22) sind, **dadurch gekennzeichnet, dass** die Halbschale mit im wesentlichen gleichförmiger Krümmung ist, dass auf dem Sattel der Halbschale sich in Längsausrichtung des Strukturteils (10) der ersten Art ein Strukturteil (16) der vierten Art erstreckt, in das endseitig die Strukturteile (12) der zweiten Art einstückig einmünden, und dass der axiale Abstand in Längsausrichtung des Strukturteils (10) der ersten Art zwischen benachbarten Strukturteilen (12) der zweiten Art einer Gruppe (20 oder 22) deutlich geringer ist als der axiale Abstand zwischen den Gruppen (20, 22) untereinander.

2. Strukturbauteil nach Anspruch 1, **dadurch gekennzeichnet, dass** zumindest zwei der genannten Gruppen (20,22) bezogen auf die Längsausrichtung des Strukturteils (10) der ersten Art sich in Endbereichen (24,26) desselben befinden.

3. Strukturbauteil nach Anspruch 1 oder 2, **dadurch gekennzeichnet, dass** die beiden Endbereiche (24,26) des Strukturteils (10) der ersten Art durch Teile der Halbschale gebildet sind, wobei sich an einen Endbereich (26) zumindest ein flügelartiges Erweiterungsstück (28,30,32) als weiteres Strukturteil (14) der dritten Art quer zur Längsausrichtung des Strukturteils (10) der ersten Art anschließt.

4. Strukturbauteil nach Anspruch 3, **dadurch gekennzeichnet, dass** die jeweilige flügelartige Erweiterung (28,30,32) mit Befestigungseinrichtungen (40,42) versehen ist.

5. Strukturbauteil nach einem der Ansprüche 1 bis 4, **dadurch gekennzeichnet, dass** das Strukturteil (16) mit seinem einen freien Ende im Bereich des jeweiligen Strukturteils (14) der dritten Art in ein Strukturteil (18) der fünften Art einmündet, das sich quer zur Längsausrichtung des Strukturteils (10) der ersten Art erstreckt und dass das andere freie Ende sich in einem Abstand zum freien Ende der Halbschale befindet.

6. Strukturbauteil nach einem der Ansprüche 1 bis 5, **dadurch gekennzeichnet, dass** zumindest ein freier Seitenbereich der Halbschale eine Mehrfachstufung (44) aufweist, wobei die Stufung in Richtung des freien Endes der Halbschale zurückgesetzt ist.

7. Strukturbauteil nach einem der Ansprüche 1 bis 6, **dadurch gekennzeichnet, dass** es in der Art eines Umformteils ausgestaltet ist und dass die Strukturteile der verschiedenen Arten (10,12,14,16,18) einstückig miteinander verbunden sind.

8. Strukturbauteil nach einem der Ansprüche 1 bis 7, **dadurch gekennzeichnet, dass** zumindest die Struktureile (12,16) der zweiten und vierten Art aus dem Strukturteil (10) der ersten Art in Form von Querrippen bzw. zumindest einer Längsrippe sickenförmig ausgeformt oder eingeprägt sind.

## Claims

1. Structured component, in particular a shield part, with at least partially differently shaped structured components (10, 12, 14, 16, 18) extending from its spatial expansion and/or its directional expansion, of which at least one structured component (10) of a first type is equipped with a curvature and with a longitudinal expansion, and with structured components (12) of a second type, which follow the said curvature at least in part, whereby the structured component (10) of the first type is formed in the way of a shell, whereby the structured components (12) of the second type are paired into groups (20, 22) and extend transverse to the longitudinal direction of the structured component (10) of the first type, whereby the relevant group (20, 22) is equipped with four structured components (12) of the second type each, whereby the directly adjacent groups (20, 22) viewed in a longitudinal direction of the structured component (10) of the first type are spaced apart from each other, whereby the axial distance between adjacent structured components (12) of the second type of a group (20 or 22) is less than the width of a structured component (12) of the second type in a longitudinal direction of the structured component (10) of the first type, and whereby the shell is a half-shell, with two structured components (12) of the second type of the group (20 or 22) each located in opposing pairs on the two longitudinal sides of the half-shell, **characterised in that** the half-shell is equipped with a substantially smooth curvature, **in that** a structured component (16) of a fourth type extends in a longitudinal direction of the structured component (10) of the first type on the ridge of the half-shell, into the end of which the structured components (12) of the second type open, and **in that** the axial distance between adjacent structured components (12) of the second type of a group (20 or 22) in a longitudinal direction of the structured component (10) of the first type is clearly less than the axial distance between the groups (20, 22).

2. Structured components according to Claim 1, **characterised in that** at least two of the said groups (20, 22) is located in relation to the longitudinal direction of the structured component (10) of the first type in end areas (24, 26) of the same.

3. Structured component according to Claim 1 or 2, **characterised in that** the two end areas (24, 26) of the structured component (10) of the first type are formed by parts of the half-shell, whereby at least one wing-like expansion piece (28, 30, 32) as a further structured component (14) of a third type follows in one end area (26) transverse to the longitudinal direction of the structured component (10) of the first type.

4. Structured component according to Claim 3, **characterised in that** the relevant wing-shaped expansion (28, 30, 32) is equipped with fitting means (40, 42).

5. Structured components according to one of the Claims 1 to 4, **characterised in that** the structured component (16) opens into a structured component (18) of a fifth type in the area of the relevant structured component (14) of the third type with its one free end, which extends transverse to the longitudinal direction of the structured component (10) of the first type, and **in that** the other free end is located at a distance from the free end of the half-shell.

6. Structured component according to one of the Claims 1 to 5, **characterised in that** at least one free side area of the half-shell comprises multiple steps (44), whereby the steps are set back in the direction of the free end of the half-shell.

7. Structured component according to one of the Claims 1 to 6, **characterised in that** the same is designed in the way of a deformation part, and **in that** the structured components of the various types (10, 12, 14, 16, 18) are connected with each other to form a single piece.

8. Structured component according to one of the Claims 1 to 7, **characterised in that** at least the structured components (12, 16) of the second and fourth type are formed in a groove-shaped way or embossed in the structured component (10) of the first type in the way of transverse ribs, e.g. at least one longitudinal rib.

## Revendications

1. Composant structurel, en particulier pièce de blindage, comportant des pièces structurelles (10, 12, 14, 16, 18) constituées différemment, au moins partiellement, quant à leur étendue superficielle et/ou à leur orientation, dont au moins une pièce structurelle (10) d'un premier type est munie d'une courbure et d'une orientation longitudinale, et comportant des pièces structurelles (12) d'un deuxième type qui suivent au moins partiellement la courbure mentionnée ci-dessus, la pièce structurelle (10) du premier type étant constituée en tant que coque, les pièces structurelles (12) du deuxième type, réunies par paires pour former des groupes (20, 22), s'étendant transversalement à l'orientation longitudinale de la pièce structurelle (10) du premier type, le groupe (20, 22) respectif se présentant avec à chaque fois quatre pièces structurelles (12) du deuxième type, les groupes (20, 22) directement voisins étant distants les uns des autres, vus dans l'orientation longitudinale de la pièce structurelle (10) du premier type, la distance axiale entre des pièces structurelles (12) voisines du deuxième type d'un groupe (20 ou 22) étant inférieure à la largeur d'une pièce structurelle (12) du deuxième type dans l'orientation longitudinale de la pièce structurelle (10) du premier type, et la coque étant une demi-coque et, sur les deux grands côtés de la demi-coque, deux pièces structurelles (12) du deuxième type, respectivement opposées par paires, faisant partie du groupe (20 ou 22), **caractérisé en ce que** la demi-coque est avec une courbure de forme essentiellement régulière, **en ce que**, sur la selle de la demi-coque, dans l'orientation longitudinale de la pièce structurelle (10) du premier type, il s'étend une pièce structurelle (16) du quatrième type dans laquelle débouchent d'un seul tenant, côté extrémité, les pièces structurelles (12) du deuxième type, et **en ce que**, dans l'orientation longitudinale de la pièce structurelle (10) du premier type, la distance axiale entre des pièces structurelles (12) voisines du deuxième type d'un groupe (20 ou 22) est nettement plus petite que la distance axiale entre les groupes (20, 22) entre eux.

2. Composant structurel selon la revendication 1, **caractérisé en ce que** au moins deux des groupes (20, 22) cités, par rapport à l'orientation longitudinale de la pièce structurelle (10) du premier type, se trouvent dans des zones extrêmes (24, 26) de celle-ci.

3. Composant structurel selon la revendication 1 ou 2, **caractérisé en ce que** les deux zones extrêmes (24, 26) de la pièce structurelle (10) du premier type sont formées par des parties de la demi-coque, au moins une pièce d'extension (28, 30, 32) en forme d'aile se raccordant à une zone extrême (26) en tant que composant structurel (14) supplémentaire du troisième type transversalement à l'orientation longitudinale de la pièce structurelle (10) du premier type.

4. Composant structurel selon la revendication 3, **caractérisé en ce que** l'extension (28, 30, 32) en forme d'aile respective est munie d'équipements de fixation (40, 42).

5. Composant structurel selon une des revendications 1 à 4, **caractérisé en ce que** le composant structurel (16), par son extrémité libre dans la zone du composant structurel (14) respectif du troisième type, débouche dans un composant structurel (18) du cinquième type qui s'étend transversalement à l'orientation longitudinale de la pièce structurelle (10) du premier type, et **en ce que** l'autre extrémité libre se trouve à distance de l'extrémité libre de la demi-coque.

6. Composant structurel selon une des revendications 1 à 5, **caractérisé en ce que** au moins une zone latérale libre de la demi-coque présente un étagement multiple (44), l'étagement étant reculé en direction de l'extrémité libre de la demi-coque.

7. Composant structurel selon une des revendications 1 à 6, **caractérisé en ce qu'**il est constitué à la façon d'une pièce de formage, et **en ce que** les pièces structurelles des différents types (10, 12, 14, 16, 18) sont raccordées les unes aux autres d'un seul tenant.

8. Composant structurel selon une des revendications 1 à 7, **caractérisé en ce que** au moins les pièces structurelles (12, 16) du deuxième et du quatrième types sont formées ou estampées en forme de nervures transversales ou au moins d'une nervure longitudinale en forme de moulure à partir de la pièce structurelle (10) du premier type.
